# EUROPEAN PATENT SPECIFICATION

(11) **EP 0 517 477 B1**
(45) Date of publication and mention of the grant of the patent: **13.08.1997**
(21) Application number: 92305031.4
(22) Date of filing: 02.06.1992
(51) Int. Cl.: G01N 33/48, G01N 15/00, G01N 35/00, G01N 15/10

(54) **Method and apparatus for automatically analyzing particles in a liquid**
Verfahren und Vorrichtung zum automatischer Analysieren von Teilchen in einer Flüssigkeit
Méthode et appareil d'analyse automatique de particules dans un liquide

(30) Priority: 05.06.1991 JP 161159/91
(43) Date of publication of application: 09.12.1992
(73) Proprietor: TOA MEDICAL ELECTRONICS CO., LTD., Chuoku, Kobe (JP)
(72) Inventor: Kuroda, Toshiaki, Takasagoshi, Hyogoken (JP)
(74) Representative: Price, Paul Anthony King

(56) References cited:
- EP-A- 0 417 006
- CH-A- 501 924
- DE-A- 3 503 475
- US-A- 4 030 888
- IBM TECHNICAL DISCLOSURE BULLETIN, vol. 19, no. 3, August 1976, US; FIELD et al., pp. 1022-1024/
- PROCEEDINGS OF THE IEEE IN MEDECINE & BIOLOGY SOCIETY, 11th Annual Conference, vol. 11, 1989, Seattle, WA (US); MORISHITA et al., pp. 1873-1874, no. XP129610/

## Description

The present invention relates to a method and apparatus for automatically analyzing particles in a liquid (e.g. in a blood specimen), such as a method for automatically analyzing the particles by using a plurality of analyzing modules which measure different properties and apparatus including such analyzing modules.

A blood cell counter is well known. The main type of blood cell counter measures basic properties such as the number of red blood cells, the number of white blood cells and the quantity of haemoglobin. Other types classify leukocytes and count reticulocytes.

In blood examinations, first of all basic properties such as the number of red blood cells, the number of white blood cells and the quantity of haemoglobin are measured (primary examination). Then further specific additional properties may be measured on the basis of the first results, such as leukocyte classification and measurement of reticulocytes (secondary examination). If the basic properties are normal, the secondary examination is not necessary. Only abnormal basic properties require secondary examination to be performed. Thus, there is a significant difference between the frequency of measurement of basic properties and the frequency of measurement of additional properties.

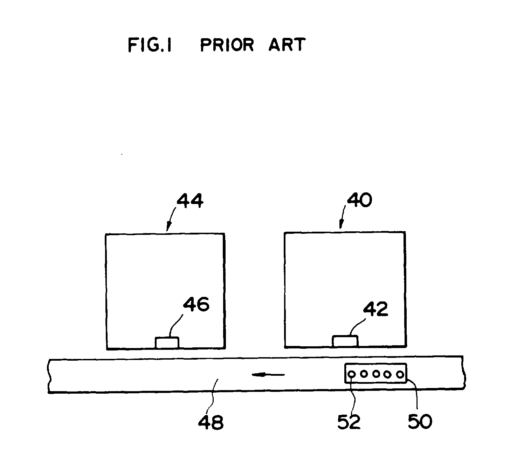

A known two-step measurement apparatus is shown in Fig. 1. A specimen 52 is mounted in a specimen rack 50 and conveyed by a conveyer 48. The specimen is sampled by a suction unit 42 of a basic examination device (blood cell counter) 40 and the sample is measured. The result of the basic measurement is produced. A controller (not shown) judges whether or not additional examination is necessary on the basis of the result. If additional examination is necessary, the specimen 52 is sampled by a suction unit 46 of an additional examination device (for example, a reticulocyte measuring device) 44 and the sample is measured. Then the result of the additional measurement is produced. If additional examination is not necessary, the specimen 52 does not stop at device 44.

Such a system is disclosed in Japanese Laid-open Patent Hei. 2-163660. A plurality of analyzing modules are disposed in parallel. Specimen circulating means efficiently sends the specimens to the analyzing modules.

When the examination system is built up by merely using a plurality of analyzing devices, the system is expensive and requires a lot of space. Also, if additional examination is necessary, time is spent taking a second sample from the specimen, and the specimen must be large enough to provide the second sample.

According to a first aspect of the present invention, there is provided a method of automatically analyzing particles in a liquid, the method comprising apparatus performing the steps of:
(a) aspirating a first specimen;
(b) preparing first and second samples from the specimen;
(c) transferring the first sample to a measuring unit and measuring one or more basic properties;
(d) storing the second sample in a temporary sump;
(e) analyzing the results of the basic measurement and deciding whether or not additional measurement is necessary;
(f) disposing of the second sample from the temporary sump if additional measurement is not necessary, or transferring the second sample from the temporary sump to a measuring unit if additional measurement is necessary and measuring one or more additional properties; and
(g) aspirating a second specimen before the end of the additional measurement of the first specimen.

Preferably, during step (g) the second specimen is aspirated before the end of the basic measurement of the first specimen; steps (b) to (f) are repeated on the second specimen; and during each step (d) the second sample is stored in an empty one of a pair of temporary sumps. By having two temporary sumps and aspirating the second specimen before the end of the basic measurement of the first specimen, the specimens are processed at a faster rate.

According to a second aspect of the present invention, there is provided apparatus for automatically analyzing particles in a liquid, comprising: means for preparing first and second samples from a specimen; a first measuring unit which is downstream of the preparing means and is arranged to measure one or more basic properties of the first sample; at least one temporary sump which is downstream of the preparing means and is arranged to temporarily store the second sample; a second measuring unit which is downstream of the temporary sump(s) and is arranged to measure one or more additional properties of the second sample; means for selectably (i) transferring the second sample from the temporary sump(s) to the second measuring unit or (ii) disposing of the second sample from the temporary sump(s); means for analyzing the measurement results; and means for controlling the operation of the apparatus; wherein the control and analyzing means are arranged, on the basis of the measurement results of the first sample, to decide whether or not additional measurement is necessary and to control the transferring/disposing means so as (i) to transfer the second sample from the temporary sump(s) to the second measuring unit if additional measurement is necessary or (ii) to dispose of the second sample from the temporary sump(s) if additional measurement is not necessary.

Preferably, the apparatus comprises a plurality of analyzing modules including (i) a basic analyzing module containing the first measuring unit and the sample preparing means and (ii) an additional analyzing module containing the second measuring unit, the temporary sump(s) and the transferring/disposing means. Because the apparatus is split into modules, the particular additional analyzing module may be selected to suit the purpose of the examination.

In an embodiment, the first sample is transferred to the measuring unit of the basic analyzing module and the second sample is transferred to the temporary sump of the additional analyzing module.

In the measuring unit of the basic analyzing module, basic properties are measured, whilst the second sample remains in the temporary sump in the additional analyzing module. On the basis of the results of the basic measurement, it is judged whether or not additional measurement is necessary. More specifically, when the basic measurement results are normal, additional measurement is not necessary and the second sample kept in the temporary sump is disposed of. If abnormality is suspected, additional measurement is judged to be necessary and the second sample is sent to the second measuring unit so that the additional properties may be measured.

When the basic measurement of the first specimen is over, whether or not additional measurement is required, the next specimen is aspirated. In the case of additional measurement of the first specimen, the additional measurement of the first specimen and the aspiration of the next specimen overlap.

When two temporary sumps are provided, the processing of successive specimens may be overlapped to a greater extent than if only one temporary sump is provided.

The invention will now be described by way of non-limiting embodiments with reference to the accompanying drawings, in which:-
Fig. 1 is a schematic diagram of a conventional apparatus for automatically analyzing particles;
Fig. 2 is a schematic diagram of an embodiment of an apparatus for automatically analyzing particles in accordance with the invention;
Fig. 3 is a schematic diagram of sample preparing means and associated components of the apparatus of Fig. 2;
Fig. 4 is a schematic diagram of an alternative to the arrangement of Fig. 2;
Fig. 5 is a time chart of the operation of the apparatus of Fig. 3; and
Fig. 6 is a time chart of the operation of the apparatus of Fig. 4.

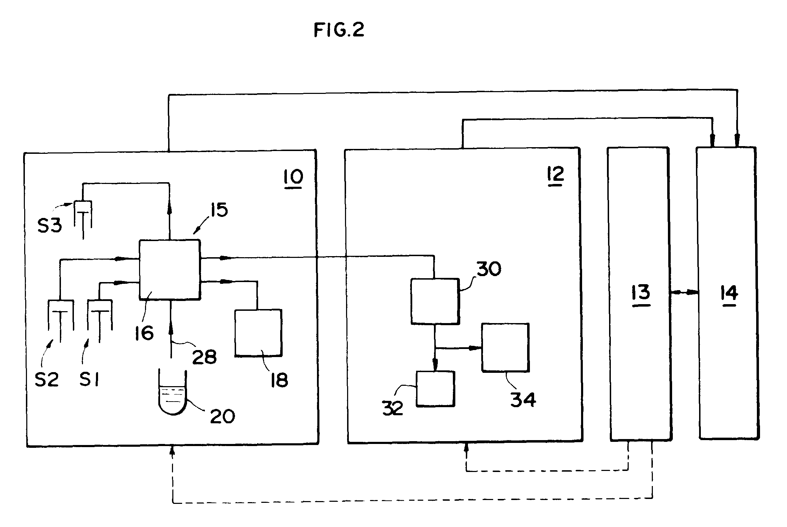

Fig. 2 shows a basic analyzing module 10 for measuring the basic properties, an additional analyzing module 12 for measuring the additional properties, a control device 13 for controlling the modules 10 and 12, and an analyzing device 14 for analyzing the measurement results. Module 10 contains sample preparing means 15 for preparing a first sample for the basic analyzing module and a second sample for the additional analyzing module. The sample preparing means 15 comprises means 16 for taking blood samples of predetermined volume from a blood specimen 20, suction means S3 connected to a specimen suction probe 28 for introducing the blood specimen into the sample taking means 16, and liquid dispensing means S1, S2 for dispensing specific volumes of liquid to dilute the first and second samples to have specific dilution factors and for expelling the first and second samples.

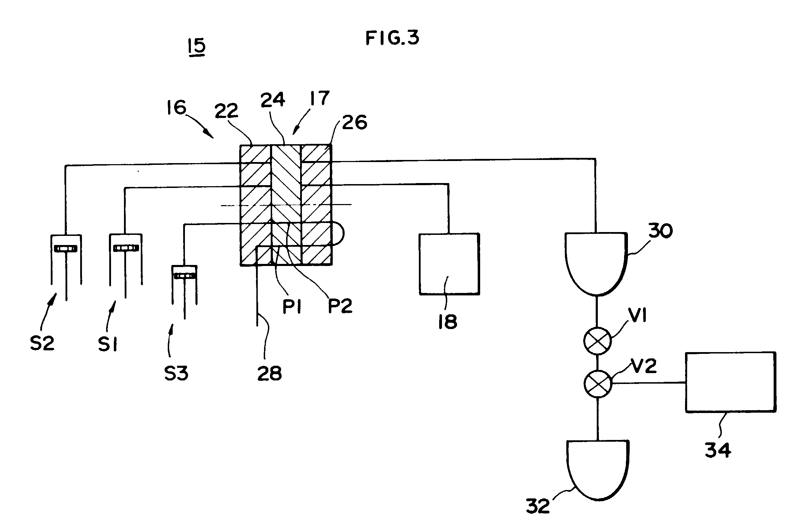

A practical example of the sample taking means 16 is shown in Fig. 3. It comprises a sampling valve 17 having a plurality (three, for example, in this embodiment) of elements 22, 24, 26 possessing passages for passing liquid such as sample or diluent liquid. The element 24 is movable and is located between stationary elements 22, 26. As the movable element 24 rotates, through passages P1, P2 disposed therein isolate predetermined volumes of the blood specimen to form the first and second samples.

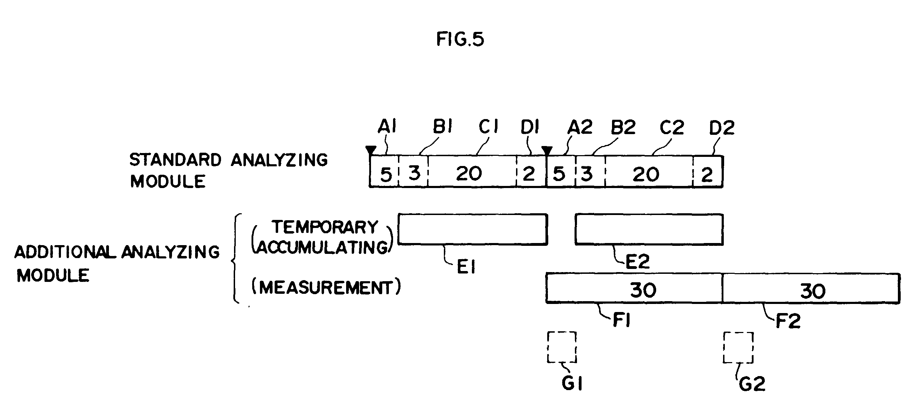

There will now be described the operation of the apparatus of Figs. 2 and 3 with reference to the time chart of Fig. 5. The numerical values in Fig. 5 denote time measured in seconds.
(1) Specimen suction step (A1).
   A first blood specimen in a specimen container 20 is sucked into the passages P1, P2 of the sampling valve 17 by the suction means S3.
(2) Sample preparation step (B1).
   The movable element 24 rotates and the specimen in the passages P1, P2 is isolated to form the first and second samples. When the movable element 24 has rotated through 180°, the dispensing means S1 is operated and the first sample in the passage P2 is sent to a measuring unit 18 of the basic or standard analyzing module 10 together with diluting liquid. The liquid dispensing means S2 is operated and the second sample in the passage P1 is transferred to a temporary sump 30 of the additional analyzing module 12 together with diluting liquid. The temporary sump 30, e.g. a chamber, is connected through valves V1, V2 to a waste liquid chamber 32 and a measuring unit 34 for measuring additional properties. Instead of diluting the specimens prior to measurement, they may be mixed with hemolyzing agent, dyestuff or the like, depending on the measurements to be performed.
(3) Basic analyzing module measurement step (C1).
   The basic properties are, for example, the number of red blood cells (RBC), the number of white blood cells (WBC), the quantity of haemoglobin (HGB), the haematocrit level (HCT), the mean red corpuscular volume (MCV), the quantity of mean red corpuscular haemoglobin (MCH), the mean red corpuscular haemoglobin concentration (MCHC), and the number of platelets (PLT). These eight basic properties are measured in the measuring unit 18.
(4) Temporary retention step (E1).
   The second sample of the additional analyzing module 12 is held in the temporary sump 30.
(5) Decision step (D1).
   When the measurement of the basic properties is over, the results are analyzed by the analyzing unit 14, and it is decided whether or not additional measurement is necessary.
(6) Disposal step (G1).
   When additional examination is not necessary, the second sample in the temporary sump 30 is directly disposed of into the waste liquid chamber 32.
(7) Additional analyzing module measurement step (F1).
   If additional measurement is necessary, the second sample is transferred from the temporary sump 30 to the measuring unit 34, and an additional property (for example, the number of reticulocytes) is measured. Alternatively, the measuring unit 34 may classify and count the leukocytes.
(8) Steps for next specimen (A2 to G2).
   After the decision step (D1), without waiting for the end of the measurement step (F1) of the additional analyzing module 12, the basic analyzing module 10 starts processing the second specimen. Steps A2 to G2 for the second specimen correspond to steps A1 to G1 for the first specimen.

Because the temporary sump 30 temporarily holds the second sample in the additional analyzing module 12, the additional measurement step F1 and the steps A2 to E2 on the next specimen occur at the same time, so that the overall processing time for all of the specimens is shortened. In fact, as may be seen from Fig. 5, for a large number of specimens the overall processing time would be almost half what it would be if the specimens were processed one by one.

If the measurement step F of the additional analyzing module takes longer than steps A to D of the basic analyzing module, the interval between successive starts of the cycle of steps (each start is indicated by a black triangle in Fig. 5) will increase and settle down to a value equal to the duration of the measurement step F. However, if necessary, more measuring units 34 may be provided in the additional analyzing module 12.

If the time required for the measurement step F is shorter than the total time required for steps A to D, steps A1 to D1 for the first specimen may slightly overlap steps A2 to D2 of the second specimen. Thus, shortening the length of the measurement step F enables the interval between successive starts of the cycle of steps to be reduced.

However, because there is only one temporary sump 30, the overlap of steps A1 to D1 and steps A2 to D2 must not be increased to the extent that the temporary retention steps E1 and E2 overlap each other. If it is desired to shorten still further the interval between successive steps A, another temporary sump must be included in the additional analyzing module 12.

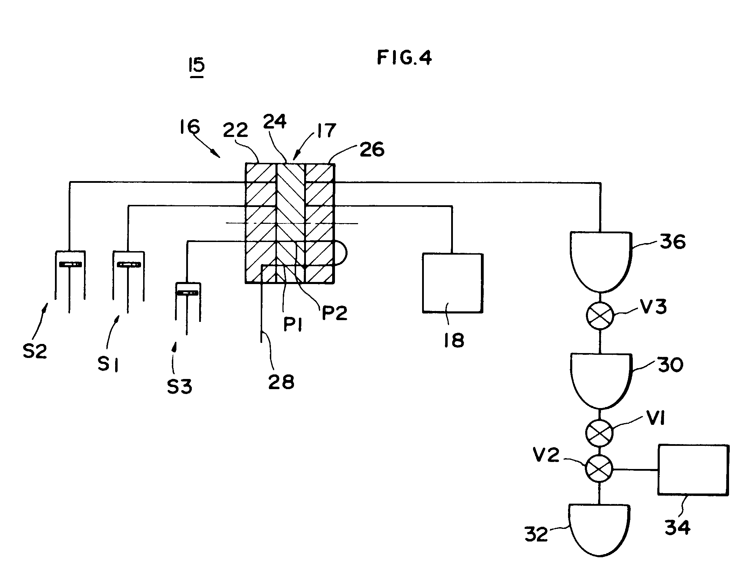

Such a modified arrangement is shown in Fig. 4, where a second temporary sump 36 is disposed between the sample preparing means 15 and the measuring unit 34. The second temporary sump 36 is disposed in series with and upstream of the first temporary sump 30. Between the temporary sumps 30, 36 is a valve V3. The second sample of the first specimen passes from the sump 36 to the sump 30 and remains there until the end of step E1. This leaves sump 36 free to receive the second sample of the second specimen at the beginning of step E2. When the second sample of the first specimen is transferred to the measuring unit 34 or waste liquid chamber 32, the second sample of the second specimen is transferred during step E2 from the sump 36 to the sump 30. The sump 36 is then empty, and it is ready to receive the second sample of the third specimen at the beginning of step E3. In this way, the second samples sequentially move along the sumps 30, 36 so that the second samples of two specimens may be temporarily stored at the same time.

The second temporary sump 36 may be connected in parallel to the first temporary sump 30, so that the sumps alternately receive successive second samples.

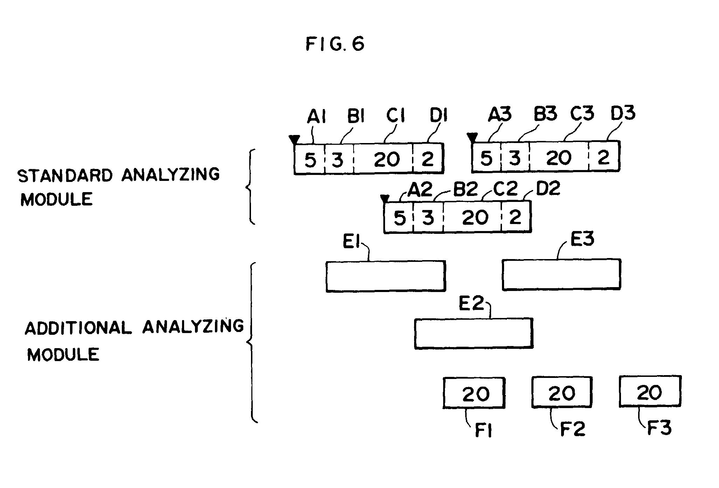

Fig. 6 is a time chart showing the overlap that is possible when the second temporary sump 36 is used. The numerals in Fig. 6 denote time measured in seconds. The temporary retention steps E1 and E2, and E2 and E3, of the additional analyzing module overlap each other.

In the above explanation of Figs. 2 to 6, the basic properties are measured and then, if necessary, the additional properties are measured.

Before each measurement step C, a selection may be made between three alternative modes of operation:
(i) measure the basic properties and, if necessary, the additional properties;
(ii) measure only the basic properties; and
(iii) measure the basic properties and the additional properties irrespective of the outcome of the basic measurement.
As a result, the apparatus can examine the specimens in a flexible manner. Preferably, the examination mode is set individually for each specimen. This may be achieved by attaching a bar code label or other identification means to the specimen container and installing means for reading the identification means, e.g. when the specimen container reaches the basic analyzing module 10.

The above preferred embodiments of the present invention offer the following benefits.
(1) The apparatus for automatically analyzing particles has a plurality of analyzing modules, and the analyzing modules can be selected so that the desired range of properties are measured. This is done by selecting appropriate modules for the particular type of examination.
(2) The additional analyzing module is provided with means for temporarily retaining the second sample, and this permits overlap of the examination operations of successive specimens. Each specimen is sampled only once, and sample waste is eliminated and time is saved.
(3) After the results of the basic measurement are known, it is decided whether to dispose of the second sample or to measure additional properties. Thus, only specimens which need additional examination are subjected to such examination. The additional examination of a specimen does not slow down the apparatus because it is performed in parallel with the basic examination of the next specimen. Thus, the apparatus is economical and efficient.

## Claims

1. A method of automatically analyzing particles in a liquid, the method comprising apparatus performing the steps of:
(a) aspirating a first specimen;
(b) preparing first and second samples from the specimen;
(c) transferring the first sample to a measuring unit (18) and measuring one or more basic properties;
(d) storing the second sample in a temporary sump (30);
(e) analyzing the results of the basic measurement and deciding whether or not additional measurement is necessary;
(f) disposing of the second sample from the temporary sump (30) if additional measurement is not necessary, or transferring the second sample from the temporary sump (30) to a measuring unit (34) if additional measurement is necessary and measuring one or more additional properties; and
(g) aspirating a second specimen before the end of the additional measurement of the first specimen.

2. A method according to claim 1, wherein:
a plurality of analyzing modules (10, 12) are used;
during steps (a) and (g) the first and second specimens are aspirated into a basic analyzing module (10); and
during step (d) the second sample is stored in an additional analyzing module (12).

3. A method according to claim 1 or 2, wherein in step (g) the second specimen is aspirated after the basic measurement of the first specimen.

4. A method according to claim 1 or 2, wherein:
during step (g) the second specimen is aspirated before the end of the basic measurement of the first specimen;
steps (b) to (f) are repeated on the second specimen; and
during each step (d) the second sample is stored in an empty one of a pair of temporary sumps (30, 36).

5. A method according to any one of claims 1 to 4, wherein, before the basic measurement of each specimen, a selection is made between (i) retaining steps (e) and (f) in unmodified form for the specimen, (ii) modifying step (e) so that additional measurement of the specimen is deemed not to be necessary, irrespective of the outcome of the basic measurement, and (iii) modifying step (e) so that additional measurement of the specimen is deemed to be necessary, irrespective of the outcome of the basic measurement.

6. Apparatus for automatically analyzing particles in a liquid, comprising:
means (15) for preparing first and second samples from a specimen;
a first measuring unit (18) which is downstream of the preparing means (15) and is arranged to measure one or more basic properties of the first sample;
at least one temporary sump (30, 36) which is downstream of the preparing means (15) and is arranged to temporarily store the second sample;
a second measuring unit (34) which is downstream of the temporary sump(s) (30, 36) and is arranged to measure one or more additional properties of the second sample;
means (V1, V2) for selectably (i) transferring the second sample from the temporary sump(s) (30, 36) to the second measuring unit (34) or (ii) disposing of the second sample from the temporary sump(s);
means (14) for analyzing the measurement results; and
means (13) for controlling the operation of the apparatus;
wherein the control and analyzing means (13, 14) are arranged, on the basis of the measurement results of the first sample, to decide whether or not additional measurement is necessary and to control the transferring/disposing means (V1, V2) so as (i) to transfer the second sample from the temporary sump(s) (30, 36) to the second measuring unit (34) if additional measurement is necessary or (ii) to dispose of the second sample from the temporary sump(s) if additional measurement is not necessary.

7. Apparatus according to claim 6, wherein the apparatus comprises a plurality of analyzing modules (10, 12) including (i) a basic analyzing module (10) containing the first measuring unit (18) and the sample preparing means (15) and (ii) an additional analyzing module (12) containing the second measuring unit (34), the temporary sump(s) (30, 36) and the transferring/disposing means (V1, V2).

8. Apparatus according to claim 6 or 7, wherein the sample preparing means (15) comprises a sampling valve (17) for isolating predetermined volumes of the specimen to form the first and second samples, a specimen suction probe (28) connected to the sampling valve (17), specimen suction means (S3) connected to the sampling valve (17), liquid dispensing means (S1) connected to the sampling valve (17) for transferring the first sample to the first measuring unit (18), and liquid dispensing means (S2) connected to the sampling valve (17) for transferring the second sample to the temporary sump (30) or one of the temporary sumps (30, 36).

9. Apparatus according to any one of claims 6 to 8, wherein the at least one temporary sump (30, 36) comprises a pair of sumps (30, 36) arranged in series or parallel upstream of the second measuring unit (34).

## Patentansprüche

1. Verfahren zum automatischen Analysieren von Teilchen in einer Flüssigkeit mit einem Gerät unter Durchführung der Stufen, in denen man
a) ein erstes Probengut einsaugt,
b) aus dem Probengut eine erste und zweite Probe herstellt,
c) die erste Probe zu einer Meßeinheit (18) überführt und eine oder mehrere Basiseigenschaften mißt,
d) die zweite Probe in einem zeitweiligen Vorrat (30) speichert,
e) die Ergebnisse der Basismessung analysiert und entscheidet, ob eine weitere Messung erforderlich ist oder nicht,
f) die zweite Probe aus dem zeitweiligen Vorrat (30) entsorgt, wenn eine weitere Messung nicht erforderlich ist, oder die zweite Probe aus dem zeitweiligen Vorrat (30) zu einer Meßeinheit (34) überführt, wenn eine zusätzliche Messung erforderlich ist, und eine oder mehrere zusätzliche Eigenschaften mißt und
g) ein zweites Probengut vor dem Ende der zusätzlichen Messung des ersten Probengutes einsaugt.

2. Verfahren nach Anspruch 1, bei dem mehrere Analysenmodule (10, 12) verwendet werden, während der Stufen a) und g) das erste und zweite Probengut in ein Basis-analysenmodul (10) eingesaugt wird und während der Stufe d) die zweite Probe in einem zusätzlichen Analysenmodul (12) gespeichert wird.

3. Verfahren nach Anspruch 1 oder 2, bei dem in der Stufe g) das zweite Probengut nach der Basismessung des ersten Probengutes eingesaugt wird.

4. Verfahren nach Anspruch 1 oder 2, bei dem während der Stufe g) das zweite Probengut vor dem Ende der Basismessung des ersten Probengutes eingesaugt wird, die Stufen b) und f) mit dem zweiten Probengut wiederholt werden und während jeder Stufe d) die zweite Probe in einem leeren eines Paares zeitweiliger Vorräte (30, 36) gespeichert wird.

5. Verfahren nach einem der Ansprüche 1 bis 4, bei dem vor der Basismessung eines jeden Probengutes eine Auswahl zwischen
i) einem Beibehalten der Stufen e) und f) in unmodifizierter Form für das Probengut,
ii) einem Modifizieren der Stufe e), so daß eine zusätzliche Messung des Probengutes ungeachtet des Ausgangs der Basismessung nicht als notwendig erachtet wird, und
iii) einem Modifizieren der Stufe e), so daß eine zusätzliche Messung des Probengutes ungeachtet des Ausgangs der Basismessung als notwendig erachtet wird,
getroffen wird.

6. Vorrichtung zum automatischen Analysieren von Teilchen in einer Flüssigkeit mit
einer Einrichtung (15) zur Herstellung einer ersten und zweiten Probe aus einem Probengut,
einer ersten Meßeinheit (18), die sich abstromwärts von der Herstellungseinrichtung (15) befindet und so angeordnet ist, daß sie eine oder mehrere Basiseigenschaften der ersten Probe mißt,
wenigstens einem zeitweiligen Vorrat (30, 36), der sich abstromwärts von der Herstellungseinrichtung (15) befindet und so angeordnet ist, daß er zeitweilig die zweite Probe speichert,
einer zweiten Meßeinheit (34), die sich abstromwärts von dem zeitweiligen Vorrat oder den zeitweiligen Vorräten (30, 36) befindet und derart angeordnet ist, daß sie eine oder mehrere weitere Eigenschaften der zweiten Probe mißt,
einer Einrichtung (V1, V2) zur selektiven Überführung der zweiten Probe von dem zeitweiligen Vorrat bzw. den zeitweiligen Vorräten (30, 36) zu der zweiten Meßeinheit (34) (i) oder Entsorgung der zweiten Probe aus dem zeitweiligen Vorrat oder den zeitweiligen Vorräten (ii),
einer Einrichtung (14) zum Analysieren der Meßergebnisse und einer Einrichtung (13) zum Steuern des Betriebs der Vorrichtung,
wobei die Steuer- und Analysiereinrichtung (13, 14) so angeordnet sind, daß sie auf der Basis der Meßergebnisse der ersten Probe entscheiden, ob eine zusätzliche Messung erforderlich ist oder nicht, und die Überführungs-/Entsorgungseinrichtung (V1, V2) derart steuern, daß sie
i) die zweite Probe von dem zeitweiligen Vorrat bzw. den zweitweiligen Vorräten (30, 36) zu der zweiten Meßeinheit (34) überführen, wenn zusätzlich Messung erforderlich ist, oder
ii) die zweiten Probe aus dem zeitweiligen Vorrat bzw. den zeitweiligen Vorräten entsorgen, wenn zusätzliche Messung nicht erforderlich ist.

7. Vorrichtung nach Anspruch 6, die mehrere Analysenmodule (10, 12) einschließlich
i) eines Basisanalysenmoduls (10), welches die erste Meßeinheit (18) und die Probenherstellungseinrichtung (15) enthält, und
ii) eines zusätzichen Analysenmoduls (12), welches die zweite Meßeinheit (34), den zeitweiligen Vorrat bzw. die zeitweiligen Vorräte (30, 36) und die Überführungs-/Entsorgungseinrichtung (V1, V2) enthält,
umfaßt.

8. Vorrichtung nach Anspruch 6 oder 8, bei der die Probenherstellungseinrichtung (15) ein Probennahmeventil (17) zur Isolierung vorbestimmter Volumina des Probengutes unter Bildung der ersten und zweiten Probe, eine Probengutansaugsonde (28), die mit dem Probennahmeventil (17) verbunden ist, eine Probengutansaugeinrichtung (S3), die mit dem Probennahmeventil (17) verbunden ist, eine Flüssigkeitsabgabeeinrichtung (S1), die mit dem Probennahmeventil (17) zur Überführung der ersten Probe zu der ersten Meßeinheit (18) verbunden ist, und eine Flüssigkeitsabgabeeinrichtung (S2), die mit dem Probennahmeventil (17) zur Überführung der zweiten Probe zu dem zeitweiligen Vorrat (30) oder einem der zeitweiligen Vorräte (30, 36) verbunden ist, umfaßt.

9. Vorrichtung nach einem der Ansprüche 6 bis 8, bei der der wenigstens eine zeitweilige Vorrat (30, 36) ein Paar von Vorräten (30, 36) umfaßt, die in Reihe oder parallel aufstromwärts von der zweiten Meßeinheit (34) angeordnet sind.

## Revendications

1. Procédé d'analyse automatique de particules dans un liquide, le procédé comprenant un appareil exécutant les étapes :
(a) d'aspiration d'un premier prélèvement ;
(b) de préparation de premier et second échantillons à partir du prélèvement ;
(c) de transfert du premier échantillon à une unité de mesure (18), et de mesure d'une ou de plusieurs propriétés de base ;
(d) de stockage du second échantillon dans un puisard temporaire (30) ;
(e) d'analyse des résultats de la mesure de base, et de décision en ce qui concerne le fait qu'une mesure additionnelle est, ou non, nécessaire ;
(f) d'évacuation du second échantillon du puisard temporaire (30) si la mesure additionnelle n'est pas nécessaire, ou de transfert du second échantillon du puisard temporaire (30) à une unité de mesure (34) si la mesure additionnelle est nécessaire, et de mesure d'une ou de plusieurs propriétés additionnelles ; et
(g) d'aspiration d'un deuxième prélèvement avant la fin de la mesure additionnelle du premier prélèvement.

2. Procédé selon la revendication 1, dans lequel :
on utilise une pluralité de modules d'analyse (10, 12) ;
pendant les étapes (a) et (g) on aspire les premier et deuxième prélèvements dans un module d'analyse de base (10) ; et
pendant l'étape (d) on emmagasine le second échantillon dans un module d'analyse additionnelle (12).

3. Procédé selon la revendication 1 ou 2, dans lequel dans l'étape (g) on aspire le deuxième prélèvement après la mesure de base du premier prélèvement.

4. Procédé selon la revendication 1 ou 2, dans lequel :
pendant l'étape (g) le deuxième prélèvement est aspiré avant la fin de la mesure de base du premier prélèvement ;
les étapes (b) à (f) sont répétées sur le deuxième prélèvement ; et
pendant chaque étape (d) le second échantillon est emmagasiné dans l'un, vide, d'une paire de puisards temporaires (30, 36).

5. Procédé selon l'une quelconque des revendications 1 à 4, dans lequel, avant la mesure de base de chaque prélèvement, on fait un choix entre (i) conserver les étapes (e) et (f) sous forme non modifiée pour le prélèvement ; (ii) modifier l'étape (e) de sorte que la mesure additionnelle du prélèvement soit considérée comme n'étant pas nécessaire, quel que soit le résultat de la mesure de base ; et (iii) modifier l'étape (e) de sorte que la mesure additionnelle du prélèvement soit considérée comme étant nécessaire, quel que soit le résultat de la mesure de base.

6. Appareil pour analyser automatiquement les particules dans un liquide, comprenant:
un moyen de préparation (15) de premier et second échantillons provenant d'un prélèvement ;
une première unité de mesure (18) qui est en aval du moyen de préparation (15) et qui est agencée pour mesurer une ou plusieurs propriétés de base du premier échantillon ;
au moins un puisard temporaire (30, 36) qui est en aval du moyen de préparation (15) et qui est agencé pour emmagasiner temporairement le second échantillon ;
une seconde unité de mesure (34) qui est en aval du, ou des, puisard(s) temporaire(s) (30, 36) et qui est agencée pour mesurer une ou plusieurs propriétés additionnelles du second échantillon ;
un moyen (V1, V2) pour (i) transférer de manière sélective le second échantillon du, ou des, puisard(s) temporaire(s) (30, 36) à la seconde unité de mesure (34), ou (ii) évacuer le second échantillon du, ou des, puisard(s) temporaire(s) ;
un moyen d'analyse (14) des résultats de mesure ; et
un moyen de commande (13) du fonctionnement de l'appareil ; dans lequel les moyens de commande et d'analyse (13, 14) sont agencés pour décider, sur la base des résultats de mesure du premier échantillon, si une mesure additionnelle est, ou non, nécessaire et pour commander le moyen de transfert/évacuation (V1, V2) de façon à (i) transférer le second échantillon du, ou des, puisard(s) temporaire(s) (30, 36) à la seconde unité de mesure (34) si une mesure additionnelle est nécessaire, ou (ii) évacuer le second échantillon du, ou des, puisard(s) temporaire(s) si une mesure additionnelle n'est pas nécessaire.

7. Appareil selon la revendication 6, dans lequel l'appareil comprend plusieurs modules d'analyse (10, 12) incluant (i) un module d'analyse de base (10) contenant la première unité de mesure (18) et un moyen de préparation d'échantillons (15), et (ii) un module d'analyse additionnelle (12) contenant la seconde unité de mesure (34), le, ou les, puisard(s) temporaire(s) (30, 36) et le moyen de transfert/évacuation (V1, V2).

8. Appareil selon la revendication 6 ou 7, dans lequel le moyen de préparation d'échantillons (15) comprend un robinet d'échantillonnage (17) pour isoler des volumes prédéterminés du prélèvement pour former les premier et second échantillons, une sonde d'aspiration de prélèvement (28) raccordée au robinet d'échantillonnage (17) ; un moyen d'aspiration de prélèvement (S3) raccordé au robinet d'échantillonnage (17) ; un moyen de délivrance de liquide (S1) raccordé au robinet d'échantillonnage (17) pour transférer le premier échantillon à la première unité de mesure (18), et un moyen de délivrance de liquide (S2) raccordé au robinet d'échantillonnage (17) pour transférer le second échantillon au puisard temporaire (30), ou à l'un des puisards temporaires (30, 36).

9. Appareil selon l'une quelconque des revendications 6 à 8, dans lequel ledit au moins un puisard temporaire (30, 36) comprend une paire de puisards (30, 36) disposée en série ou en parallèle en amont de la seconde unité de mesure (34).
